# EUROPÄISCHE PATENTANMELDUNG

(11) **EP 4 628 394 A1**
(43) Veröffentlichungstag der Anmeldung: **08.10.2025**
(21) Anmeldenummer: 25168511.1
(22) Anmeldetag: 04.04.2025
(51) Int. Cl.: B62J 7/08, B62J 7/04, B62J 9/23, B62J 9/24, B62J 9/30

(54) **HALTERUNG FÜR ZUBEHÖR AN EINEM FAHRRAD**

(30) Priorität: 05.04.2024 DE 202024101666 U
(71) Anmelder: tubus carrier systems GmbH, 48157 Münster (DE)
(72) Erfinder: BÖHM, Roland, 48157 Münster (DE)
(74) Vertreter: Patentanwälte Olbricht Buchhold Keulertz

(57) **Zusammenfassung**

Die Erfindung betrifft eine Anordnung zum Halten eines Zubehörs an einem Fahrrad, insbesondere an einem Fahrrad-Gepäckträger (7), wobei der Gepäckträger (7) Anschlussmittel aufweist, und wobei das Zubehör Anschlussmittel aufweist, die dazu eingerichtet sind, im Gebrauch mit den Anschlussmitteln des Fahrrads, insbesondere des Gepäckträgers (7), zusammenzuwirken und das Zubehör am Fahrrad, insbesondere am Gepäckträger (7), zu halten, wobei vorgeschlagen wird, dass erste Anschlussmittel ein Anschlussprofil (2) mit einer Nut (3) aufweisen, wobei der Nutquerschnitt in der Oberfläche des Anschlussprofils (2) mündet und sich von der Mündung in das Innere des Anschlussprofils (2) hin erweitert, und dass zweite Anschlussmittel, die mit den ersten Anschlussmitteln zusammenwirken, folgende Elemente aufweisen: einen Keder (4), der im Gebrauch in dem erweiterten Querschnittsbereich des Anschlussprofils (2) aufgenommen ist, und eine so genannte Fahne (5), welche entlang des Keders (4) an diesen anschließt, einen flacheren Querschnitt als der Keder (4) aufweist und sich im Gebrauch aus der Nut (3) des Anschlussprofils (2) heraus erstreckt, wobei die Nut (3) an einem ihrer beiden Stirnenden in der Art offen ist, dass der Keder (4) samt Fahne (5) an diesem Stirnende in die Nut (3) einführbar ist. Weiterhin betrifft die Erfindung ein Fahrrad-Zubehör und einen Gepäckträger.

## Beschreibung

Die Erfindung betrifft eine Anordnung zum Halten eines Zubehörs an einem Fahrrad.

Aus der Praxis ist es bekannt, ein Gepäckstück wie z.B. eine sogenannte Fahrradtasche, die aus einem textilen oder einem Folienmaterial besteht, mithilfe von Haken an eine liegend verlaufende Stange eines Gepäckträgers anzuhängen. Abgesehen davon, dass der Gepäckträger in diesem Fall die entsprechende Stange bereitstellen muss, erfordert der Gepäckträger keine spezielle Ausgestaltung, um das Zubehör halten zu können. Weiterhin ist es aus der Praxis bekannt, Körbe oder Boxen mithilfe von Rastsystemen auf einer Plattform eines Gepäckträgers zu befestigen. In diesen Fällen weisen der Gepäckträger und das Zubehör komplementär zusammenwirkende Anschlussmittel auf, um die jeweilige Rastverbindung zu ermöglichen. Schließlich ist es seit Jahrzehnten aus der Praxis bekannt, Zubehör mithilfe von Schlaufen an einen Gepäckträger oder auch an Rahmenrohre, im Falle von kleineren Werkzeugtaschen auch an den Sattel eines Fahrrads anzuhängen.

Ebenso ist aus der Praxis bekannt, Zubehör an dem Rahmen oder an dem Lenker eines Fahrrads zu halten, wie beispielsweise Körbe, Boxen, Trinkflaschen, Beleuchtungsmittel oder Ähnliches.

Regelmäßig weist das jeweilige Zubehör einen als Behälter ausgestalteten Hauptkörper auf sowie Anschlussmittel, die über den Hauptkörper hinaus nach außen ragen. Diese nach außen ragenden Vorsprünge an dem jeweiligen Zubehör können im Alltag als störend oder hinderlich empfunden werden, da sie je nach Ausrichtung des Zubehörs entweder an der Kleidung der das Zubehör tragenden Person oder an Gegenständen in der Umgebung hängenbleiben und sich damit verhaken können. Der Tragekomfort, wenn das Zubehör von dem Fahrrad entnommen ist und von einer Person getragen wird, ist dadurch erheblich eingeschränkt. Durch eine bewegliche, z.B. schwenkbare Ausgestaltung der zubehörseitigen Anschlussmittel können diese Nachteile minimiert werden. Insbesondere wenn der Hauptkörper weich und verformbar ausgestaltet ist, z.B. aus einem textilen oder einem Folienmaterial besteht, und wenn dabei die Anschlussmittel starr ausgestaltet sind, z.B. in Form Haken, die aus Metall bestehen und mit Kunststoff ummantelt sein können oder die als Spritzgussteile aus Kunststoff ausgestaltet sein können, ergibt sich zudem eine Diskrepanz hinsichtlich der optischen und praktischen Anmutung einerseits des Hauptkörpers und andererseits der Anschlussmittel des Zubehörs. Dadurch ist es beispielsweise nicht möglich, eine an sich weiche und verformbare Fahrradtasche bei Nichtgebrauch möglichst platzsparend zusammenzurollen.

Der Erfindung liegt die Aufgabe zugrunde, eine Anordnung zum Halten eines Zubehörs an einem Fahrrad zu schaffen, die einen sicheren Halt des Zubehörs ebenso gewährleistet wie einen möglichst hohen Tragekomfort des vom Fahrrad entnommenen Zubehörs.

Diese Aufgabe wird durch eine Anordnung nach Anspruch 1 sowie durch ein Fahrrad-Zubehör nach Anspruch 6 und einen Gepäckträger nach Anspruch 11 gelöst. Weitere vorteilhafte Aspekte, Details und Ausgestaltungen der Erfindung ergeben sich aus den abhängigen Ansprüchen und aus der Beschreibung.

Gemäß einem ersten Aspekt betrifft die vorgestellte Erfindung eine Anordnung zum Halten eines Zubehörs an einem Fahrrad, insbesondere an einem Fahrrad-Gepäckträger, wobei das Fahrrad, insbesondere der Gepäckträger, Anschlussmittel aufweist, und wobei das Zubehör Anschlussmittel aufweist, die dazu eingerichtet sind, im Gebrauch mit den Anschlussmitteln des Fahrrads, insbesondere des Gepäckträgers, zusammenzuwirken und das Zubehör am Fahrrad, insbesondere am Gepäckträger, zu halten, wobei erste Anschlussmittel ein Anschlussprofil mit einer Nut aufweisen, wobei der Nutquerschnitt in der Oberfläche des Anschlussprofils mündet und sich von der Mündung in das Innere des Anschlussprofils hin erweitert, und dass zweite Anschlussmittel, die mit den ersten Anschlussmitteln zusammenwirken, folgende Elemente aufweisen: einen Keder, der im Gebrauch in dem erweiterten Querschnittsbereich des Anschlussprofils aufgenommen ist, und eine so genannte Fahne, welche entlang des Keders an diesen anschließt, einen flacheren Querschnitt als der Keder aufweist und sich im Gebrauch aus der Nut des Anschlussprofils heraus erstreckt, wobei die Nut an einem ihrer beiden Stirnenden in der Art offen ist, dass der Keder samt Fahne an diesem Stirnende in die Nut einführbar ist.

Die Erfindung schlägt mit anderen Worten vor, eine formschlüssige Halterung des Zubehörs mittels eines Keders zu ermöglichen. Ein Element der Anordnung - typischerweise der Fahrradrahmen beziehungsweise der Gepäckträger - weist hierzu eine Nut auf, deren Querschnitt als im Wesentlichen pilzförmig bezeichnet werden kann, nämlich mit einem ersten, vergleichsweise großen Querschnittsbereich entsprechend einem Kopf des Pilzes sowie mit einem zweiten, vergleichsweise schmaleren Querschnittsbereich entsprechend einem Stamm des Pilzes. Der Kopfabschnitt der Nut dient dazu, den Keder des anderen Elements der Anordnung - typischerweise das Zubehör - aufzunehmen, und der Stammabschnitt verläuft vom Kopfabschnitt bis zu einer Mündung der Nut, so dass sich eine an den Keder anschließende Fahne durch den Stammabschnitt erstrecken kann.

Der Keder kann somit auf einfache Weise unmittelbar in Längsrichtung in die Nut stirnseitig eingefädelt werden und bevorzugt über die Kederlänge in die Nut eingeführt werden. Die Nut ist zumindest an einem ihrer beiden Stirnenden offen, das heißt an einer vorderen, einem Handhabenden zugewandten Seite, sodass der Keder in die Nut im Wesentlichen ungehindert einführbar ist, ohne diesen beispielsweise wesentlich knicken zu müssen oder dergleichen, begünstigend eine einfache Handhabung. Damit unterscheiden sich die erfindungsgemäßen Anschlussmittel von einer aufwendig zu fertigenden, sogenannten Schlüssel-Loch-Passung oder Ähnlichem, in welcher ein Anschlussprofil insbesondere mehrere Pass-Konturen aufweist, entsprechend derer ein Schlüsselteil ausgestaltet sein muss, wobei grundsätzlich mehrere Bewegungsrichtungen erforderlich sind, und nicht nur eine Längsrichtung, um das Schlüsselteil in die Pass-Konturen bestimmungsgemäß einführen zu können. Nach dem Einfädeln des Keders in Längsrichtung ist dieser quer zur Längsrichtung der Nut formschlüssig gehalten. Über die Fahne, die aus der Nut herausragt und bevorzugt an das Zubehör anschließt, ist das Zubehör auf diese Weise formschlüssig am Fahrrad, insbesondere am Gepäckträger gehalten.

Der Keder kann aus einer Schnur oder Kordel mit mehreren Fasern bestehen, z.B. aus gewachsenen organischen Fasern, oder als Drahtseil aus metallischen Fasern, oder aus Kunststofffasern, oder er kann in Art eines Monofilaments aus einem einzigen Materialstrang bestehen, z. B. aus Leder oder insbesondere aus Kunststoff. Ebenso kann der Keder eine Anzahl der genannten Materialien gemeinsam aufweisen. Vorzugsweise ist der Keder somit länglich und / oder im Wesentlichen rund ausgestaltet, derart, dass beispielsweise die Länge des Keders mindestens das Fünffache, besonders bevorzugt wenigstens das Zehnfache, des Kederdurchmessers umfasst. Vorteilhaft kann die Länge des Keders zwischen 50 mm und 700 mm betragen, bevorzugt zwischen 100 mm und 400 mm, besonders bevorzugt zwischen 150 mm und 250 mm. Die Fahne kann aus einem Folienmaterial bestehen und / oder aus einem textilen Material, und in beiden Fällen bevorzugt als Ummantelung um den Keder herum verlaufen, oder die Fahne kann gemeinsam mit dem Keder als extrudiertes Kunststoffprofil ausgestaltet sein. Insbesondere kann die Fahne ein Gelege und / oder Gewebe umfassen, wobei diese bevorzugt synthetische Fasern aufweisen, beispielsweise Aramid-Fasern, polyamide Fasern wie Nylon, oder dergleichen.

Unter einer Anzahl ist im Kontext der vorgestellten Erfindung eine Einzahl oder Mehrzahl eines entsprechenden Merkmals zu verstehen.

Die vorgestellte Erfindung ist besonders vorteilhaft für eine Anordnung zum Halten eines Zubehörs an einem typischen Fahrrad-Gepäckträger, welcher als Bauteil oder Baugruppe regelmäßig im Wesentlichen oberhalb eines Vorder- und / oder Hinterrads eines Fahrrads angeordnet ist, so dass das Beispiel eines derartigen Fahrrad-Gepäckträgers nachfolgend besonders ausführlich erörtert wird. Die Erfindung ist jedoch nicht auf das Halten eines Zubehörs an ebendiesem beschränkt. Stattdessen kann alternativ oder zusätzlich der erwähnte Rahmen, insbesondere ein Oberrohr, ein Sitzrohr oder dergleichen, und / oder der Lenker eines Fahrrads in Art eines Zubehör- beziehungsweise Gepäck-Trägers die erfindungsgemäßen Anschlussmittel aufweisen, welche dazu konfiguriert sind, mit den Anschlussmitteln eines Zubehörs zusammenzuwirken.

Vorteilhaft kann vorgesehen sein, dass die ersten Anschlussmittel am Fahrrad, insbesondere am Gepäckträger, und die zweiten Anschlussmittel am Zubehör angeordnet sind.

Der Keder und die Fahne können an dem Zubehör im Gebrauch einen nach außen ragenden Vorsprung bilden, der die Befestigung an dem Fahrrad, insbesondere an dem Gepäckträger, ermöglicht, in dem der Keder in die Nut der ersten, am Fahrrad befindlichen Anschlussmittel eingefädelt wird. Bei Nichtgebrauch können der Keder und die Fahne flach am Hauptkörper des Zubehörs anliegen, nämlich aufgrund der Verformbarkeit der Fahne. Die Wahrscheinlichkeit, sich an der Kleidung einer das Zubehör tragenden Person oder, wenn der Keder von der Person weg nach außen ragt, an Gegenständen in der Umgebung zu verhaken, ist dadurch erheblich reduziert. Zudem bilden der Keder und die Fahne keine offenen, hakenförmigen Konturen, so dass die erwähnte Wahrscheinlichkeit auch aus diesem Grund gering ist.

Für eine vorteilhafte Ausgestaltung kann somit vorgesehen sein, dass Keder und / oder Fahne flexibel bzw. verformbar ausgestaltet ist / sind, das heißt insbesondere biegsam sowie beweglich und somit im Sinne der Erfindung im Wesentlichen spannungsfrei verformbar, wobei bevorzugt die Verformbarkeit in Längsrichtung des Keders geringer ist als die Verformbarkeit senkrecht dazu. Beispielsweise kann die Verformbarkeit senkrecht zur Längsrichtung des Keders derart ausgestaltet sein, dass die Fahne nebst Keder aus einer vom Hauptkörper des Zubehörs entfernten Gebrauchsstellung, in welcher der Keder samt Fahne in das Anschlussprofil eingeführt werden kann, in eine eng am Hauptkörper anliegende Ruhestellung bewegt werden kann, wobei bevorzugt der Keder entlang einer Bogenbahn beweglich ist.

Geparkte Fahrräder, welche mittels Fahrradständer, insbesondere mittels Einbeinständer, in einer Parkposition abgestützt sind, sind in variierendem Ausmaß regelmäßig zum Boden leicht schräg ausgerichtet, mit der Folge, dass die relative Ausrichtung der Anschlussmittel zueinander variieren kann, was wiederum das Einfädeln des Keders in die Nut erschweren kann. Eine entsprechend biegsame Fahne ist vorteilhaft, da eine freie Anpassung der Kederausrichtung ermöglicht wird, ohne das Zubehör als solches, beispielsweise eine Fahrradtasche, entsprechend ausrichten zu müssen, so dass das Einführen des Keders in die Nut für einen Handhabenden maßgeblich vereinfacht werden kann.

Im Vergleich zu starren, aus Metall oder Kunststoff bestehenden Beschlagelementen, welche als zweite Anschlussmittel am Zubehör angeordnet sind, können der Keder und die Fahne bei einer geeigneten Materialwahl hinsichtlich ihrer optischen Ausgestaltung und auch beispielsweise hinsichtlich ihrer Verformbarkeit dem Material des Hauptkörpers des Zubehörs deutlich ähnlicher ausgestaltet sein, so dass beispielsweise eine textile Anmutung des Zubehörs durch die zweiten Anschlussmittel nicht - oder zumindest nicht nennenswert - beeinträchtigt wird.

In umgekehrter Ausgestaltung können jedoch auch die ersten Anschlussmittel des Zubehör- beziehungsweise des Gepäckträgers den Keder und die Fahne aufweisen. Der Vorteil dieser Umkehrung der erfindungsgemäßen Anordnung besteht darin, dass der Überstand am Zubehör minimal ist. Dadurch wird der Tragekomfort des Zubehörs verbessert, wenn dieses in der Hand beispielsweise als Gepäckstück getragen wird, beispielsweise in Art eines Koffers oder einer Tasche. Wenn beispielsweise der Gepäckträger ohnehin Strangpressprofilelemente aus Aluminium aufweist oder Spritzgussteile aus Kunststoff, können die betreffenden Bauteile des Gepäckträgers auf einfache Weise dahingehend weiterentwickelt sein, dass sie auch den Keder und die Fahne bilden. Selbige Profilgeometrien kann ebenso ein Oberrohr, ein Sitzrohr oder ein Lenker aufweisen. Die zweiten Anschlussmittel am Zubehör bilden in diesem Fall das Anschlussprofil mit der Nut. Wenn beispielsweise das Zubehör als annähernd quaderförmiger Behälter ausgestaltet ist und eine obere Längskante aufweist, die im Gebrauch parallel zum Gepäckträger oder dergleichen verläuft, kann das Anschlussprofil entlang dieser Längskante verlaufen. Wenn das Anschlussprofil weniger starr als z.B. ein Aluminium-Strangpressprofil ausgestaltet ist, sondern vielmehr eine gewisse Biegsamkeit aufweist, z. B. als extrudiertes Kunststoffprofil aus einem halbharten Kunststoffmaterial, kann es in der Nähe der erwähnten Längskante eine praktisch unbeeinträchtigte Handhabung des ansonsten weichen, z. B. textilen Zubehörs ermöglichen.

Insbesondere für solches Zubehör, welches ein bestimmtes Maximalgewicht nicht überschreitet, kann ein zuverlässiger Halt am Fahrrad, insbesondere am Gepäckträger, auch dann gewährleistet werden, wenn das Anschlussprofil lediglich halbhart ist und beispielsweise aus Kunststoff besteht, wie dies bei einem am Zubehör befestigten Anschlussprofil in Frage kommen kann. Nachfolgend wird die Erfindung jedoch stets anhand einer Ausgestaltung beschrieben, bei welcher die ersten Anschlussmittel an den ohnehin starren Elementen eines Zubehör- beziehungsweise eines Gepäckträgers ein formstabiles Anschlussprofil aufweisen und die zweiten Anschlussmittel am Zubehör einen Keder aufweisen, der entweder selbst oder zumindest die daran anschließende Fahne vergleichsweise leichter verformbar ist als das Anschlussprofil und insbesondere biegsam ist.

Nach einer Weiterbildung kann vorgesehen sein, dass die ersten Anschlussmittel ein Riegelelement aufweisen, welches zwischen einer Riegelstellung und einer Freigabestellung beweglich ist, und die zweiten Anschlussmittel eine Riegelkontur aufweisen, welche im Gebrauch mit dem Riegelelement in der Art zusammenwirkt, dass das Zubehör an dem Fahrrad, insbesondere an dem Gepäckträger, festlegbar ist, indem das Riegelelement und die Riegelkontur in der Riegelstellung des Riegelelements formschlüssig ineinandergreifen.

In einer Ausgestaltung weisen die ersten, die Anschlussleiste beziehungsweise das Anschlussprofil enthaltenden Anschlussmittel ein Riegelelement auf und die zweiten Anschlussmittel eine damit zusammenwirkende Riegelkontur. Das Riegelelement ist beweglich und greift in einer Riegelstellung in die Riegelkontur ein, so dass die zweiten Anschlussmittel hinsichtlich ihrer Beweglichkeit fixiert und formschlüssig gesichert sind. Ein am Gepäckträger gehaltenes Zubehör wird auf diese Weise sicher am Gepäckträger gehalten und kann sich nicht unbeabsichtigt vom Gepäckträger lösen, indem es beispielsweise mit seinem Keder bei einer Fahrt über unebenen Untergrund in Längsrichtung aus der Nut gleitet. Aus der Riegelstellung kann das Riegelelement in eine Freigabestellung geführt werden, in welcher es die Beweglichkeit der zweiten Anschlussmittel nicht behindert, so dass beispielsweise das erwähnte, am Gepäckträger gehaltene Zubehör nun problemlos vom Gepäckträger entnommen werden kann.

Vorteilhaft kann die Riegelkontur des Zubehörs als Unterbrechung des Keders und / oder der Fahne ausgestaltet sein.

Die Riegelkontur, in welche das Riegelelement eingreifen kann, ist in einer Ausgestaltung als zumindest abschnittsweise Unterbrechung des Keders und / oder der Fahne ausgestaltet. Insbesondere wenn lediglich die Fahne mit einer Unterbrechung versehen ist, kann der Keder besonders einfach gehandhabt werden und über seine gesamte Länge in die Nut des Anschlussprofils eingeführt werden. Das Riegelelement, welches in diesem Fall quer zur Längsrichtung des Anschlussprofils beweglich sein kann, greift zur Verriegelung in die Unterbrechung der Fahne ein, so dass nun das Zubehör am Gepäckträger oder Ähnlichem in beiden Längs-Bewegungsrichtungen des Keders bzw. des Anschlussprofils fixiert ist.

Vorteilhaft kann vorgesehen sein, dass die Riegelkontur des Zubehörs als ein Endstück ausgestaltet ist, welches an ein Ende des Keders anschließt.

Die Riegelkontur ist in einer anderen Ausgestaltung als Endstück des Keders ausgestaltet. Ein solches Endstück kann beispielsweise als Spritzgussteil aus Kunststoff hergestellt sein. Es schließt einerseits an den Keder an und weist andererseits gegenüberliegend ein freies Ende auf, dass insbesondere mittels einer Spitze oder einer runden Kuppe einen verringerten Querschnitt aufweist und somit das Einführen des Keders in die Nut des Anschlussprofils erleichtert. Eine Aussparung, die beispielsweise als Querbohrung, Einbuchtung oder Einschnürung des Endstücks ausgestaltet sein kann, z.B. in Form einer zirkumferent verlaufenden Nut, ermöglicht die Aufnahme des Riegelelements, um den Keder hinsichtlich seiner Längsbeweglichkeit in dem Anschlussprofil festzulegen.

Das Riegelelement kann translatorisch beweglich sein und beispielsweise als flache Zunge, als Stift, oder gabelartig mit zwei oder mehr Zinken ausgestaltet sein. Es kann auch als Öse ausgestaltet sein, in welche beispielsweise das erwähnte Endstück des Keders eingeführt werden kann. Anschließend wird das ösenförmige Riegelelement quer zur Längsrichtung des Keders in seine Riegelstellung bewegt, in welcher es in eine Vertiefung des Endstücks eingreift bzw. einen Kopfbereich des Endstücks hintergreift. Das Riegelelement kann jedoch auch rotatorisch beweglich sein, z.B. als schwenkbeweglicher Haken, der sich in eine Nut der Riegelkontur legt oder mit seiner Spitze in eine die Riegelkontur bildende Bohrung eingreift.

Fernerhin kann vorgesehen sein, dass das Riegelelement dazu eingerichtet ist, in seiner Riegelstellung in eine Aussparung der Riegelkontur einzugreifen.

Gemäß einer Weiterbildung kann vorgesehen sein, dass das Anschlussprofil geradlinig verläuft und vorzugsweise im Gebrauch liegend ausgerichtet ist.

In einer Ausgestaltung verläuft das Anschlussprofil geradlinig und ist bevorzugt im Gebrauch liegend ausgerichtet. Wenn der Gepäckträger beispielsweise über einem Hinterrad des Fahrrads eine Plattform bildet, kann diese Plattform an einer ihrer Seitenkanten mit dem Anschlussprofil versehen sein. Der geradlinige Verlauf des Anschlussprofil ermöglicht eine besonders einfache Handhabung des Zubehörs bei der Verbindung mit dem Gepäckträger oder bei der Entnahme von dem Gepäckträger. Zweckmäßigerweise kann ein Oberrohr ein Anschlussprofil in der zuvor beschriebenen Art aufweisen. Demgegenüber kann ein Sitzrohr des Rahmens ein bevorzugt geradlinig verlaufendes Anschlussprofil aufweisen, welches im Gebrauch im Wesentlichen aufrecht ausgerichtet ist.

Alternativ oder zusätzlich zumindest abschnittsweise kann das Anschlussprofil gebogen verlaufen. Insbesondere kann das Anschlussprofil in ein Schutzblech integriert sein, welches in diesem Fall einen Gepäckträger für das Zubehör bildet. Dies ermöglicht eine optisch besonders unauffällige Ausgestaltung eines Gepäckträgers und somit eine als besonders "clean" bezeichnete, optisch reduzierte und aufgeräumte Ausgestaltung des Fahrrads, insbesondere wenn keine weiteren Gepäckträgerelemente wie z.B. die oben erwähnte Plattform vorgesehen sind. Der große Radius, den das Schutzblech bei Laufrädern mit einer Größe von 26 Zoll oder mehr aufweist, ermöglicht trotz des gebogenen Verlaufs des Anschlussprofils eine ausreichend ergonomische Handhabung des Zubehörs.

Ein weiterer Aspekt der Erfindung betrifft ein Fahrrad-Zubehör, das dazu eingerichtet ist, als Zubehör einer Anordnung mit einer Anzahl der vorliegend beschriebenen Merkmale verwendet zu werden, wobei das Zubehör einen Hauptkörper aufweist, an dem die Anschlussmittel des Zubehörs befestigt sind.

Wie weiter oben beschrieben, kann als Teil einer erfindungsgemäßen Anordnung ein Fahrrad-Zubehör das Anschlussprofil aufweisen. In einer als vorteilhaft angesehenen Ausgestaltung weist jedoch ein erfindungsgemäßes Fahrrad-Zubehör den Keder und die Fahne auf, wobei die Fahne den Keder mit dem Hauptkörper des Zubehörs verbindet, weil bei dieser Ausgestaltung eine weiche, textilartige Verformbarkeit des Hauptkörpers durch die zubehörseitigen Anschlussmittel möglichst wenig beeinträchtigt wird.

Gemäß einer Ausgestaltung kann vorgesehen sein, dass an dem Hauptkörper eine bewegliche Blende angeordnet ist, welche je nach ihrer Stellung die Anschlussmittel des Zubehörs wahlweise verdeckt oder freigibt und vorzugsweise welche in ihrer die Anschlussmittel verdeckenden Stellung am Hauptkörper festlegbar ist.

In einer Ausgestaltung weist das Fahrradzubehör eine Blende auf, die dazu eingerichtet ist, die zubehörseitigen Anschlussmittel wahlweise abzudecken oder freizugeben. Die Blende kann als längliche Lasche, ähnlich wie eine aus der Bekleidungsindustrie bekannte Patte einer Pattentasche ausgestaltet sein. Sollten die zubehörseitigen Anschlussmittel durch den Kontakt mit den Anschlussmitteln des Zubehör- beziehungsweise des Gepäckträgers verschmutzen, beispielsweise aufgrund von Abrieb der Anschlussmittel selbst oder aufgrund von Verschmutzungen, die in die Nut des Anschlussprofil gelangt ist, verhindert die Blende den Kontakt der verschmutzten zubehörseitigen Anschlussmittel mit der Kleidung einer Person, welche das Zubehör z.B. als Rucksack, Tasche oder Koffer trägt, auch wenn die zubehörseitigen Anschlussmittel nicht vom Körper abgewandt, sondern zum Körper der Person hin ausgerichtet sind. Um diese Wirkung der Blende sicherzustellen, kann die Blende in ihrer die Anschlussmittel verdeckenden Stellung am Hauptkörper des Zubehörs festgelegt werden.

Vorteilhaft kann die Blende als Lasche aus einem textilen oder Folienwerkstoff ausgestaltet sein.

In einer Ausgestaltung besteht die Blende aus einem textilen oder einem Folienwerkstoff. Gleichermaßen können Materialkombinationen vorgesehen sein. Bei einem Hauptkörper, der aus einem textilen oder einem Folienwerkstoff besteht, stellt eine solche Ausgestaltung aus einem materialgleichen Werkstoff eine Ausgestaltung der Blende dar, die dem Hauptkörper sowohl optisch als auch haptisch möglichst ähnlich und dementsprechend unauffällig ist.

Weiterhin kann vorgesehen sein, dass die Blende am Hauptkörper mittels eines Reißverschlusses festlegbar ist oder dass die Blende am Hauptkörper mittels Druckknöpfen festlegbar ist.

Die Festlegung der Blende am Hauptkörper, wenn sie sich in ihrer die Anschlussmittel verdeckenden Stellung befindet, kann beispielsweise mittels eines Reißverschlusses oder mittels Druckknöpfen erfolgen. Diese Verschlusselemente haben sich für textile und ähnliche Gestaltungen bewährt und ermöglichen eine einfache, unkomplizierte Handhabung. Die Verwendung eines Reißverschlusses ermöglicht eine Betätigung, ohne Druck in Richtung des Innenraums des Zubehörs ausüben zu müssen, und Druckknöpfe stellen Befestigungselemente dar, die besonders unempfindlich gegen Verschmutzungen sind.

Gemäß einer Weiterbildung kann vorgesehen sein, dass das Zubehör die zweiten Anschlussmittel aufweist, wobei die Fahne den Keder mit einem Hauptkörper des Zubehörs verbindet.

Wenn, wie weiter oben erwähnt, die zubehörseitigen Anschlussmittel den Keder und die Fahne aufweisen, so dass die Fahne den Keder mit dem Hauptkörper des Zubehörs verbindet, erfolgt die Handhabung des Zubehörs derart, dass das Zubehör gehalten wird und der Keder in die Nut des Anschlussprofils eines Zubehör- beziehungsweise Gepäckträgers eingefädelt wird, bis der Keder so weit in dem Anschlussprofil aufgenommen ist, dass das Zubehör zuverlässig gehalten wird. Typischerweise wird hierzu der Keder vollständig, also über seine gesamte Länge, in das Anschlussprofil eingeführt.

Weiterhin kann vorgesehen sein, dass an wenigstens eines der beiden Enden des Keders ein Endstück anschließt, welches sich vom Keder aus verjüngt.

In einer Ausgestaltung des Zubehörs wird das Einfädeln des Keders in das Anschlussprofil, insbesondere in das Anschlussprofils eines Gepäckträgers, dadurch erleichtert, dass an wenigstens eines der beiden Enden des Keders ein Endstück anschließt, welches sich vom Keder aus verjüngt, so dass es aufgrund seines dort geringeren Querschnitts besonders einfach in die Nut des Anschlussprofils eingeführt werden kann, insbesondere in die am Zubehör- beziehungsweise Gepäckträger befindliche Nut.

In einer Ausgestaltung besteht der Hauptkörper des Zubehörs aus einem textilen Material. Dies ermöglicht die Ausgestaltung des Zubehörs als Tasche oder Rucksack, die besonders bequem zu tragen ist, wenn sie nicht am Zubehör- beziehungsweise Gepäckträger eines Fahrrads befestigt ist.

Der Keder des Zubehörs besteht in einer Ausgestaltung aus einem Kunststoffmaterial, so dass er eine hervorragende Witterungsbeständigkeit aufweist. Insbesondere wenn der Keder als Monofilament ausgestaltet ist, weist er eine hervorragende Formbeständigkeit im Hinblick auf Querschnittsverringerungen auf, so dass er auch bei stärkeren Belastungen zuverlässig in dem erweiterten Querschnittsbereich der Nut des Anschlussprofils verbleibt und nicht bis zu deren Mündung, quer zur Längsrichtung der Nut, aus der Nut herausgezogen werden kann.

In einer Ausgestaltung besteht die Fahne aus einem Textilmaterial. Hierdurch wird eine Biegsamkeit und Beweglichkeit der Fahne unterstützt, welche es beispielsweise erleichtert, den Keder aus einer vom Hauptkörper des Zubehörs entfernten Gebrauchsstellung, in welcher er in das Anschlussprofil eingeführt werden kann, in eine eng am Hauptkörper anliegende Ruhestellung zu bewegen. In dieser Ruhestellung bildet der Keder keinen hinderlichen überstand außen am Hauptkörper des Zubehörs und kann beispielsweise von der bereits erwähnten Blende verdeckt werden.

In einer Ausgestaltung sind der Keder sowie die Fahne gemeinsam als extrudiertes Kunststoffprofil ausgestaltet. Dies ermöglicht eine besonders wirtschaftliche Herstellung des Zubehörs, da nicht Keder und Fahne als separate Elemente bereitgestellt und miteinander verbunden werden müssen, beispielsweise indem der Keder in das die Fahne bildende Material eingenäht zu werden braucht.

Ein weiterer Aspekt der Erfindung betrifft einen Gepäckträger, der dazu eingerichtet ist, als Gepäckträger einer erfindungsgemäßen Anordnung verwendet zu werden. Er weist zu diesem Zweck die gepäckträgerseitigen Anschlussmittel auf, die im Gebrauch mit den zubehörseitigen Anschlussmitteln zusammenwirken.

Im Sinne der vorliegenden Erfindung können das Ober- und / oder das Sitzrohr eines Fahrradrahmens, der Fahrradlenker oder Ähnliches, in Art eines Zubehörträgers den erwähnten Gepäckträger schaffen, so dass die nachfolgend beschriebenen Merkmale nicht auf einen typischen Fahrrad-Gepäckträger beschränkt sind.

Bevorzugt weist der vorgeschlagene Gepäckträger die ersten Anschlussmittel auf, nämlich das Anschlussprofil, welches zur Aufnahme des Keders dient. Da in der Praxis die Gepäckträger häufig erheblich steifer und formstabiler ausgestaltet sind als das Zubehör, kann ein besonders formstabiles Anschlussprofil z.B. aus einem faserverstärkten Kunststoff oder als metallisches Strangpressprofil, z.B. aus einer Aluminiumlegierung, problemlos in den Gepäckträger integriert werden, so dass die erfindungsgemäße Anordnung oder auch ein erfindungsgemäßer Gepäckträger möglichst wirtschaftlich herstellbar ist. Zudem bietet ein möglichst formstabiles Anschlussprofil eine hervorragende Sicherheit dagegen, dass der Keder quer zu seiner Längsrichtung aus der Nut des Anschlussprofils herausgezogen werden kann und sichert somit zuverlässig den Halt des Zubehörs an dem Gepäckträger.

Nach einer Weiterbildung wird vorgeschlagen, dass der Gepäckträger dazu eingerichtet ist, eine Anordnung mit Riegeleinrichtung zu schaffen, wobei das Riegelelement mit einem weiteren Verriegelungsmechanismus des Gepäckträgers in der Art gekoppelt ist, dass beide mittels eines gemeinsamen Betätigungselements in ihre jeweilige Freigabestellung beweglich sind.

Wenn der Gepäckträger die ersten Anschlussmittel und insbesondere auch das weiter oben bereits erwähnte Riegelelement aufweist, kann das Riegelelement mit einem weiteren Verriegelungsmechanismus des Gepäckträgers gekoppelt sein. Beispielsweise kann der Gepäckträger eine Plattform aufweisen und eine Rastverriegelung eines Zubehörs ermöglichen, welches auf die Plattform aufgeschoben wird. Um diese Rastverriegelung zu lösen, ist es aus der Praxis bekannt, eine federbelastete Lasche oder Taste zu verwenden. Mit demselben Betätigungselement auch das Riegelelement der erfindungsgemäßen Anordnung freigeben zu können, erleichtert die Handhabung der einzelnen Zubehörteile, wenn das Fahrrad komplett entladen werden soll, wie dies z.B. bei Erreichen einer Unterkunft auf einer Radtour gewünscht sein kann.

In einer Ausgestaltung ist das Anschlussprofil als Aluminium-Strangpressprofil ausgestaltet, insbesondere das am Gepäckträger befindliche Anschlussprofil. Dies ermöglicht eine wirtschaftliche Herstellung und eine hervorragende Maßhaltigkeit der jeweiligen Querschnittsgeometrie, so dass einerseits eine leichte Handhabung des Keders beim Einführen oder bei der Entnahme aus dem Anschlussprofil, andererseits aber auch ein zuverlässig sicherer Halt des Zubehörs ermöglicht sind.

In einer Ausgestaltung mündet die Nut im Gebrauch in eine Seitenfläche des Gepäckträgers. Da das Zubehör aufgrund seines Eigengewichts nach unten zieht, wird die Fahne, ausgehend von dem Keder, zunächst seitlich zur Nutmündung verlaufen und anschließend von der Nutmündung nach unten. Die dabei auftretende Reibung zwischen der Fahne und dem Anschlussprofil reduziert die Zugkraft, welche auf den Keder quer zu dessen Längsrichtung einwirkt, so dass ein besonders zuverlässiger Halt des Keders in dem Anschlussprofil erreicht wird. Weiterhin ist die Nut und deren Mündung sichtbar, so dass die Handhabung des Zubehörs beim Einfädeln des Keders in die Nut besonders einfach und unkompliziert ist. Die Richtungsangaben wie "seitlich" oder "unten" beziehen sich auf die Ausrichtung, welche die jeweiligen Elemente der erfindungsgemäßen Anordnung im Gebrauch einnehmen, also beispielsweise an einem aufrechtstehenden oder fahrenden Fahrrad.

Alternativ oder zusätzlich dazu mündet in einer Ausgestaltung die Nut im Gebrauch in eine untere Fläche des Gepäckträgers. Dies ist ästhetisch vorteilhaft, da die Nut, insbesondere deren Mündung, somit praktisch unsichtbar ist. Zudem ist die Nut vor dem Eindringen von Verschmutzungen, z.B. aufgrund von Niederschlägen, optimal geschützt.

Gemäß einer Weiterentwicklung kann vorgesehen sein, dass die Nut einen ersten Abschnitt aufweist, der im Gebrauch in eine untere Fläche des Gepäckträgers mündet, und einen zweiten Abschnitt aufweist, der im Gebrauch in eine Seitenfläche des Gepäckträgers mündet, wobei der zweite Abschnitt bevorzugt kürzer ist als der erste Abschnitt, und wobei der zweite Abschnitt dazu eingerichtet ist, dass der Keder in die Nut einführbar ist.

In einer Ausgestaltung weist die Nut zwei unterschiedlich lange Abschnitte auf: in dem ersten, bevorzugt vergleichsweise größeren Abschnitt mündet die Nut in eine untere Fläche des Gepäck-trägers. In einem zweiten, deutlich kleineren Abschnitt mündet die Nut in eine seitliche Fläche des Gepäckträgers, so dass dort das Einfädeln des Keders in die Nut besonders einfach möglich ist, da in diesem kürzeren Abschnitt die Nutmündung im Sichtbereich liegt. Der kürzere Abschnitt ist daher dazu eingerichtet, dass dort der Keder in die Nut eingeführt werden kann. Dementsprechend befindet sich der kürzere Abschnitt typischerweise nicht in der Mitte, bezogen auf die Gesamtlänge der Nut, sondern vielmehr an einem ihrer beiden Enden. Zudem kann sich die Nutmündung in der Seitenfläche des Gepäckträgers trichterförmig verjüngen, zu dem anderen, längeren Abschnitt hin, so dass auch diese Trichterform das Einfädeln des Keders in die Nut vereinfacht.

Weitere Merkmale, Einzelheiten und Vorteile der Erfindung ergeben sich aus dem Wortlaut der Ansprüche sowie aus der folgenden Beschreibung von Ausführungsbeispielen anhand der rein schematischen Zeichnungen, wobei einzelne Merkmale oder eine Kombination von Merkmalen der dargestellten Ausführungsbeispiele auch unabhängig von der übrigen Ausgestaltung verwirklicht sein können. Dabei zeigt
- Fig. 1: eine perspektivische Ansicht auf ein erstes Ausführungsbeispiel einer Plattform eines Fahrrad-Gepäck-trägers sowie in vergrößerter Darstellung von den in Längsrichtung verlaufenden Seitenkanten der Plattform,
- Fig. 2: ein erstes Ausführungsbeispiel eines Keders samt Fahne in einem ersten Anwendungsfall,
- Fig. 3: das Ausführungsbeispiel von Fig. 2 in einem anderen Anwendungsfall,
- Fig. 4: eine perspektivische Ansicht schräg von hinten auf ein zweites Ausführungsbeispiel eines lediglich teilweise montierten Fahrrad-Gepäckträgers,
- Fig. 5: eine perspektivische Ansicht schräg von hinten auf ein drittes Ausführungsbeispiel eines Fahrrad-Gepäckträgers,
- Fig. 6: eine schematische Darstellung eines Keders samt Fahne sowie einer damit zusammenwirkenden Verriegelungseinrichtung,
- Fig. 7: einen Querschnitt durch den Keder samt Fahne von Fig. 6,
- Fig. 8: eine perspektivische Ansicht auf einen in eine Fahne eingenähten Keder sowie ein damit zusammenwirkendes Anschlussprofil,
- Fig. 9: den in dem Anschlussprofil aufgenommenen Keder von Fig. 8 sowie ein damit zusammenwirkendes Riegelelement,
- Fig. 10: eine perspektivische Ansicht auf ein Viertes Ausführungsbeispiel eines Fahrrad-Gepäckträgers, und
- Fig. 11: einen Querschnitt durch ein Schutzblech mit integriertem Gepäckträger.

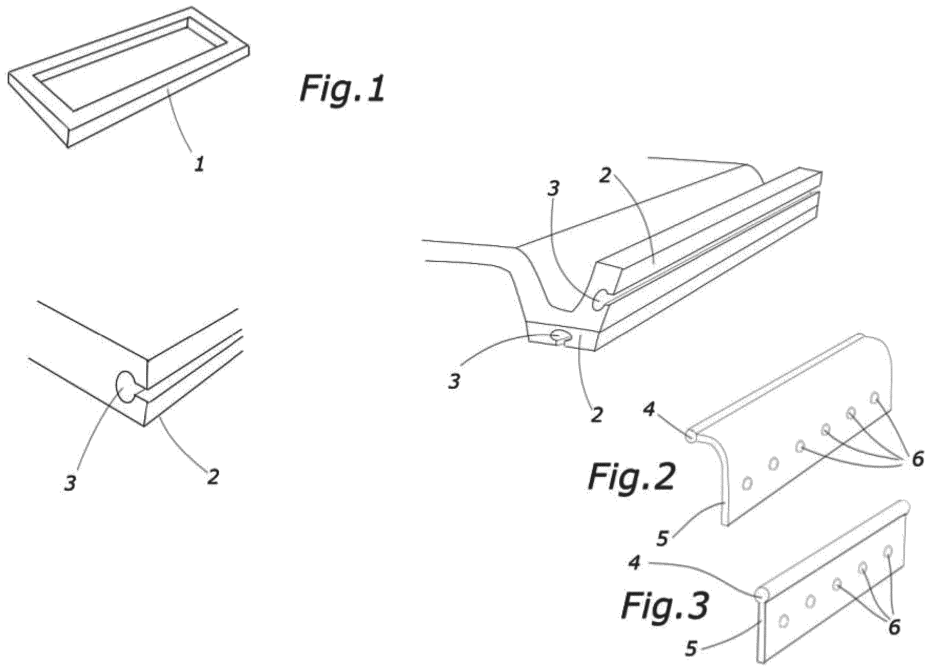

In Fig. 1 ist in einer perspektivischen Ansicht schräg von oben eine Plattform 1 eines Fahrrad-Gepäckträgers dargestellt, die in Art eines rechteckigen Rahmens ausgestaltet ist. Die Plattform 1 ist dazu bestimmt, in Längsrichtung über dem Hinterrad eines Fahrrads montiert zu werden, so dass sie zwei kürzere Vorder-und Hinterkanten sowie zwei längere Seitenkanten aufweist. An wenigstens einer der Seitenkanten verläuft ein Anschlussprofil 2 in Längsrichtung der Plattform 1.

Unten links ist in Fig. 1 dargestellt, dass das Anschlussprofil 2 in einer Ausgestaltung eine Nut 3 aufweist, die in eine seitliche Fläche des Gepäckträgers mündet, nämlich in die nach außen weisende Seitenfläche einer Seitenkante der Plattform 1. Die Nut 3 ist im Querschnitt pilzförmig mit Kopf und Stamm ausgestaltet und weist einen ersten, vergleichsweise breiteren Kopfabschnitt auf sowie einen zweiten, vergleichsweise schmaleren Stammabschnitt, der sich von dem Kopfabschnitt bis zur Außenfläche des Anschlussprofils 2 erstreckt und somit die Mündung der Nut 3 bildet.

Als Alternative dazu, dass die Nut 3 in eine seitliche Fläche des Gepäckträgers mündet, ist in Fig. 1 unten rechts dargestellt, dass die Nut 3 des Anschlussprofils 2 wahlweise auch in eine untere Fläche des Gepäckträgers münden kann, und dass auch zwei Anschlussprofile 2 an dem Gepäckträger verwirklicht sein können, mit dementsprechend zwei Nuten 3, von denen eine Nut 3 in eine seitliche und eine andere Nut 3 in eine untere Fläche des Gepäckträgers mündet.

Fig. 2 zeigt einen Keder 4, der bei diesem Ausführungsbeispiel gemeinsam mit einer an den Keder 4 anschließenden Fahne 5 als Strangpressprofil aus einem biegsamen Kunststoff hergestellt ist. Die Fahne 5 weist eine Mehrzahl von Löchern 6 auf, die zur Befestigung der Fahne 5 an einem Hauptkörper eines Zubehörs genutzt werden können, beispielsweise für eine Naht oder für eine Nietreihe. Das Strangpressprofil aus Kunststoff ist biegsam und Fig. 2 zeigt, wie die Fahne 5 eine Biegung von im Wesentlichen 90° beschreibt, wenn der Keder 4 dieses Strangpressprofils in eine seitlich mündende Nut 3 eines Anschlussprofils 2 eingeführt ist und das Zubehör mit seinem Eigengewicht und gegebenenfalls zusätzlicher Ladung eine nach unten wirkende Zugkraft auf die Fahne 5 ausübt.

Fig. 3 zeigt das Strangpressprofil von Fig. 2, jedoch in einem anderen Anwendungsfall, wenn nämlich der Keder 4 in eine unten mündende Nut 3 eines Anschlussprofils 2 eingeführt ist, so dass die Fahne 5 im Wesentlichen geradlinig vom Keder 4 aus nach unten gezogen wird.

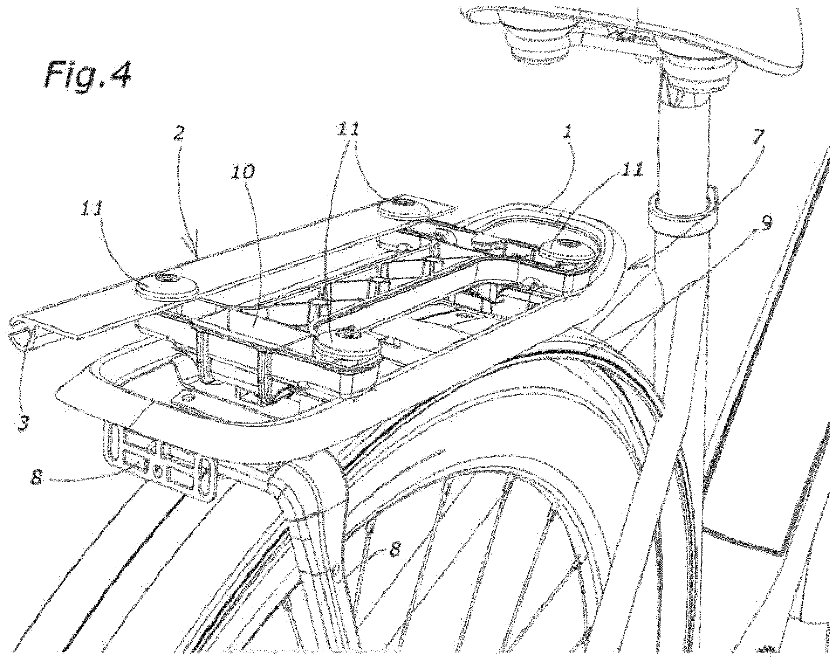

Fig. 4 zeigt einen Blick schräg von oben auf ein Hinterrad eines Fahrrads. Ein Gepäckträger 7 ist über dem Hinterrad montiert, und seine Plattform 1 stützt sich hinten über aufrecht verlaufende Streben 8 und vorne auf einem Schutzblech 9 ab. Der Gepäckträger 7 ist für eine Rastverriegelung von Zubehör konzipiert, und oberhalb der Plattform 1 ist ein Adapter 10 dargestellt, der mit den gepäckträgerseitigen Elementen der Rastverriegelung zusammenwirkt und auf dem Gepäckträger 7 verrastet ist.

Der Adapter 10 weist vier Verschraubungsstellen 11 auf. Bei dem dargestellten Ausführungsbeispiel sind zwei dieser vier Verschraubungsstellen 11 dazu genutzt, ein Anschlussprofil 2 an dem Adapter 10 zu befestigen. Das Anschlussprofil 2 ist als Aluminium-Strangpressprofil ausgestaltet und weist eine seitlich mündende Nut 3 auf, in die ein Keder 4 eines Zubehörs eingeführt werden kann. Der Adapter 10 wird somit zu einem Teil des Gepäckträgers 7 und ermöglicht, Zubehör an dem Gepäckträger 7 mittels eines Keders zu halten.

Bei dem in Fig. 4 dargestellten Ausführungsbeispiel ist der Adapter 10 als separates Element dargestellt, er kann jedoch abweichend davon auch in eine Bodengruppe eines Zubehörs wie z. B. einer Box oder eines Korbes integriert sein. Beispielsweise kann der Adapter 10 mittels der Verschraubungsstellen 11 nicht nur mit dem Anschlussprofil 2, sondern auch mit einer solchen Bodengruppe verschraubt sein. So ergibt sich beispielsweise die Möglichkeit, Ladung wahlweise in der Box bzw. in dem Korb zu transportieren oder in einer Tasche, die an das Anschlussprofil 2 und somit seitlich an den Gepäckträger 7 angehängt werden kann. Weiterhin kann abweichend von dem in Fig. 4 dargestellten Ausführungsbeispiel an beiden Seiten des Adapters 10 jeweils ein Anschlussprofil 2 montiert sein, um mehr Transportvolumen bereitstellen zu können und eine möglichst symmetrische Verteilung der Gewichtslast am Hinterrad des Fahrrads zu ermöglichen.

Durch die Verwendung des Adapters 10 ergibt sich die Möglichkeit, auch bereits vorhandene Gepäckträger 7 nachzurüsten, um eine erfindungsgemäße Anordnung zu schaffen, bei welcher das Zubehör mittels eines Keders 4 an dem Gepäckträger 7 des Fahrrads gehalten wird.

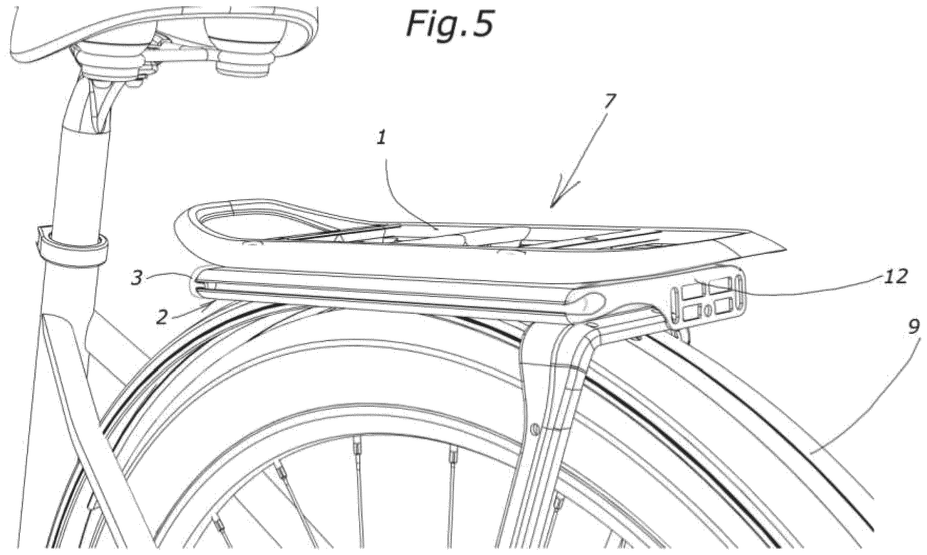

Fig. 5 zeigt ein weiteres Ausführungsbeispiel eines Fahrrad-Gepäckträgers 7 über einem Hinterrad, wobei die Plattform 1 des Gepäckträgers 7 in diesem Fall von vornherein unterhalb der beiden Längskanten jeweils mit einem Anschlussprofil 2 versehen ist, so dass eine optisch möglichst unauffällige Ausgestaltung des Gepäckträgers 7 unterstützt wird und zudem der Schwerpunkt der Last, nämlich des mittels eines Keders 4 am Gepäckträger 7 gehaltenen Zubehörs, niedriger liegt als bei dem Ausführungsbeispiele Fig. 4. Ein Formstück 12 aus Kunststoff, z. B. als Spritzgussteil ausgestaltet, ist unterhalb der Plattform 1 an deren hinterem Ende befestigt und trägt ein Rücklicht des Fahrrads. Das Formstück 12 verbindet die hinteren Enden der beiden Anschlussprofile 2 und bildet Einführtrichter, die sich von einem ersten, vergleichsweise größeren Durchmesser zu dem zweiten, vergleichsweise geringeren Durchmesser der jeweiligen Nut 3 verjüngen.

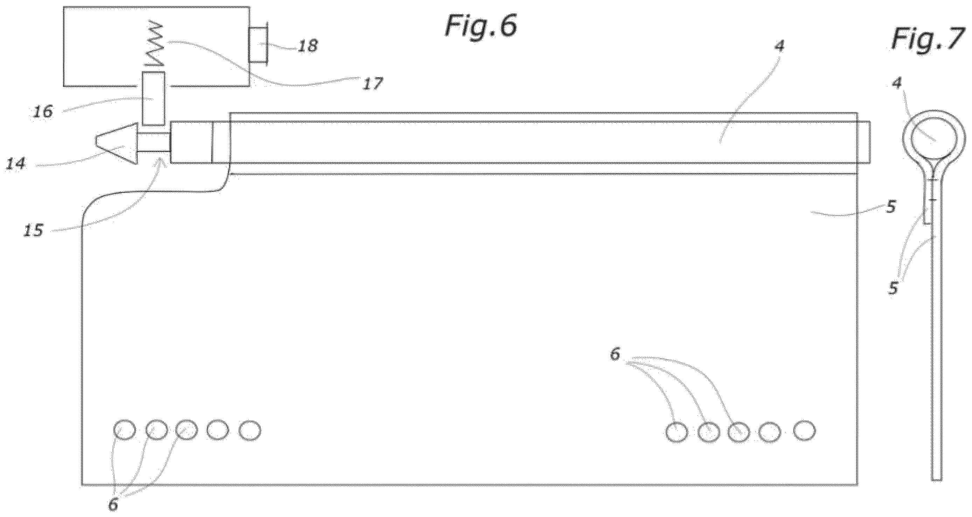

Fig. 6 zeigt ähnlich einer Röntgenaufnahme ein Fahne 5 in Seitenansicht, welche an ihrem oberen Ende einen Keder 4 umgibt. Der Keder 4 ist dazu bestimmt, in einer nach links gerichteten Bewegungsrichtung in die Nut 3 eines Anschlussprofils 2 eingeführt zu werden. An das linke Ende des Keders 4 schließt daher ein Endstück 14 an, welches sich zu seinem links dargestellten, freien Ende hin verjüngt, um das Einführen in die Nut 3 zu vereinfachen. Außerdem weist das Endstück 14 eine zirkumferent umlaufende Aussparung 15 auf, um eine Verriegelung des Zubehörs zu ermöglichen, wenn dieses an den Gepäckträger 7 angehängt ist. Bei dem dargestellten Ausführungsbeispiel ist hierzu ein vertikal bewegliches Riegelelement 16 dargestellt, welches durch eine angedeutete Feder 17 in seine Riegelstellung gedrängt wird und entgegen der Federkraft mittels einer ebenfalls schematisch angedeuteten Taste 18 in eine Freigabestellung bewegt werden kann, in welcher sich das Riegelelement 16 außerhalb der Aussparung 15 befindet.

Fig. 7 zeigt einen Querschnitt durch die Fahne 5 und den Keder 4 von Fig. 6. Der Keder 4 besteht aus einem Monofilament aus Kunststoff, und die Fahne 5 aus einem textilen Material, welches einen Tunnel bildet, der den Keder 4 umschließt. Unterhalb des Keders 4 sind die beiden aneinander anliegenden Lagen des textilen Materials miteinander vernäht.

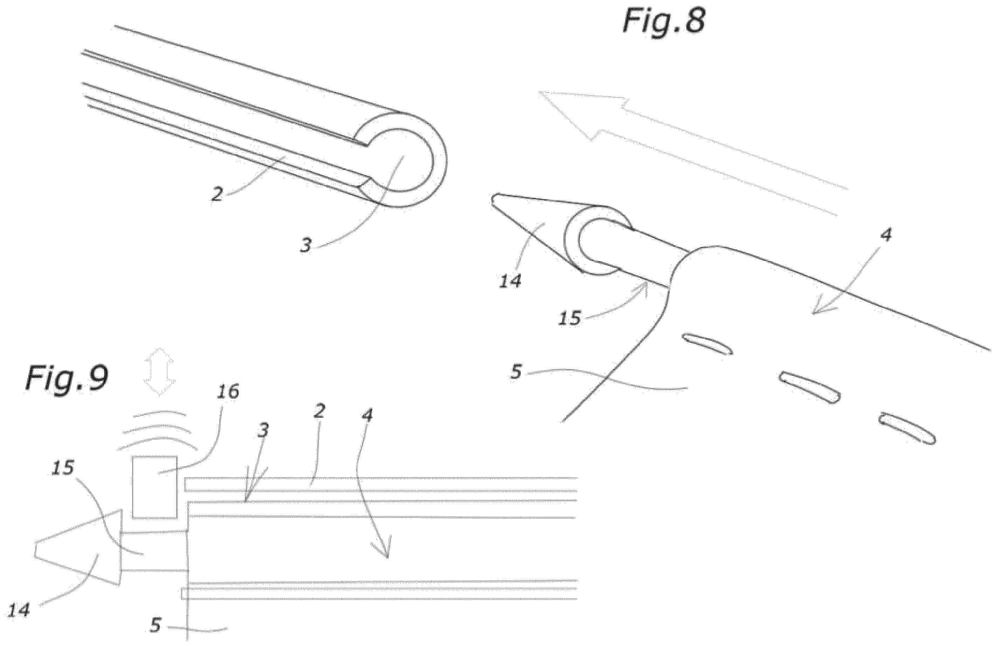

Fig. 8 zeigt ergänzend zu Fig. 6 und 7 in einer perspektivischen Ansicht den von der Fahne 5 umhüllten Keder 4 sowie das zugehörige Anschlussprofil 2, das als genutetes, seitlich offenes Rohr dargestellt ist, wobei die Nut 3 einen kreisrunden Kopfabschnitt aufweist und einen kurzen Stammabschnitt, dessen Länge der Wandstärke des Anschlussprofils 2 entspricht.

Fig. 9 zeigt die Elemente der Fig. 8 in Seitenansicht, wobei das Anschlussprofil 2 geschnitten dargestellt ist und der von der Fahne 5 umhüllte Keder 4 in das Anschlussprofil eingeführt ist. Mit dem Riegelelement 16, das in die Aussparung 15 des Endstücks 14 eingreift, ist der Keder 4 gegen Verschiebungen gesichert in dem Anschlussprofil 2 festgelegt und somit auch das entsprechende Fahrrad-Zubehör, an dem die Fahne 5 samt Keder 4 befestigt ist, verschiebesicher an einem Fahrrad-Gepäckträger festgelegt, der das Anschlussprofil 2 aufweist.

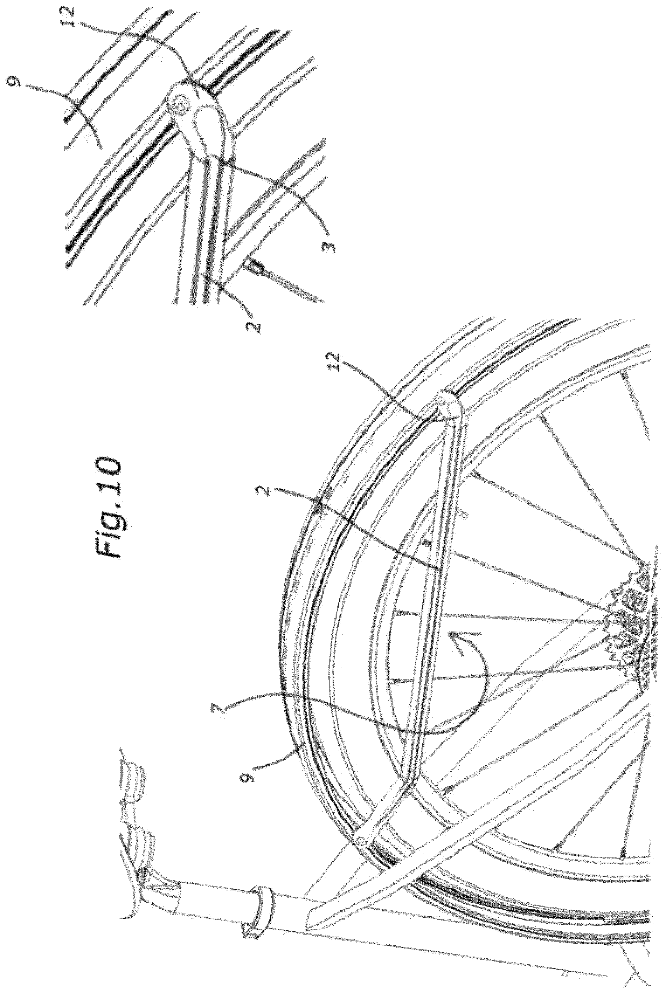

Fig. 10 zeigt ein weiteres Ausführungsbeispiel eines Fahrrad-Gepäckträgers 7 in perspektivischer Darstellung, wobei dieses Ausführungsbeispiel eines Gepäckträgers 7 keine Plattform 1 aufweist, sondern lediglich Streben, die seitlich an ein Schutzblech 9 anschließen. Rein beispielhaft ist der Gepäckträger 7 lediglich an der linken Seite des Schutzblechs 9 dargestellt, wobei abweichend von dem dargestellten Ausführungsbeispiel auf beiden Seiten des Schutzblechs 9 derartige Gepäckträger 7 angebracht sein können.

Rechts im Bild ist in Fig. 10 der hintere Bereich des Gepäckträgers 7 als lupenartig vergrößerter Ausschnitt dargestellt. Das Anschlussprofil 2 ist wie in den Fig. 8 und 9 als genutetes Rohr ausgestaltet, welches bei diesem Ausführungsbeispiel so ausgerichtet ist, dass die Nut 3 nicht seitlich, sondern unten mündet. Das hintere Ende des Anschlussprofils 2 ist in einem Formstück 12 gehalten, welches als Spritzgussteil aus Kunststoff ausgestaltet und den Fig. 10 transparent dargestellt ist. Das Formstück 12 nimmt einerseits das hintere Ende des Anschlussprofils 2 auf und ist andererseits dem Schutzblech 9 befestigt. Weiterhin bildet das Formstück 12 eine Einführöffnung, in die der Keder 4 bzw. ein an den Keder 4 anschließendes Endstück 14 eingeführt werden kann. Die Einführöffnung des Formstücks 12 kann sich trichterartig erweitern, um das Einführen des Keders 4 zu erleichtern.

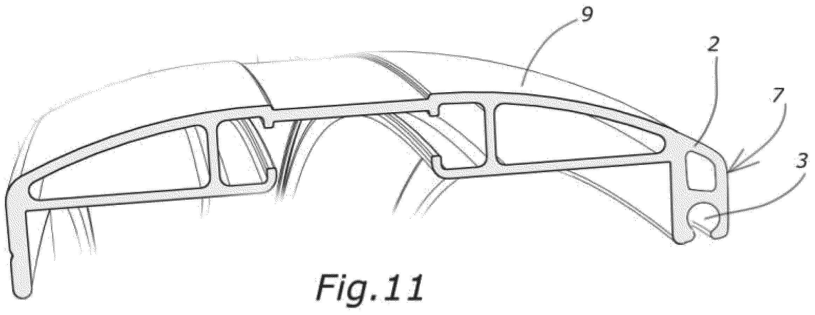

Fig. 11 zeigt ein Schutzblech 9, welches aus einem Aluminium-Strangpressprofil hergestellt ist. In dem mittleren Bereich bildet das Strangpressprofil eine Kammer, in welcher eine Verstärkungsleiste aufgenommen werden kann, beispielsweise in Form eines Flacheisens aus Stahl, um die Tragkraft des Schutzblechs 9 zu erhöhen und einen Gepäckträger außen an dem Schutzblech 9 montieren zu können, z. B. die weiter oben erwähnten Plattformen 1.

Bei dem dargestellten Ausführungsbeispiel ist das Strangpressprofil des Schutzblechs 9 um Profilabschnitte erweitert, die ein Anschlussprofil 2 bilden mit einer unten mündenden Nut 3. Bei diesem Ausführungsbeispiel wird ein optisch unauffälliger Gepäckträger 7 geschaffen, der in das Schutzblech 9 integriert ist. Das Zubehör kann in der Art an dem Gepäckträger 7 gehalten werden, dass der Keder 4 am Zubehör bogenförmig verläuft, entsprechend dem Radius des Schutzblechs 9, und dass das Zubehör mit einer dementsprechend bogenförmigen Bewegung geführt wird, wenn der Keder 4 in die Nut 3 des Anschlussprofils 2 eingeschoben wird. Dabei kann insbesondere vorgesehen sein, die Nut 3 nicht nur ausschließlich zur Achse des Rades hin münden zu lassen, um welches herum das Schutzblech 9 verläuft, sondern auch einen Abschnitt zu schaffen, in welchem die Nut 3 seitlich mündet, so dass der Keder 4 des Zubehörs nicht vom hinteren oder vorderen Ende des Schutzblechs 9 her in die Nut 3 eingeführt werden muss.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichen:

- 1: Plattform
- 2: Anschlussprofil
- 3: Nut
- 4: Keder
- 5: Fahne
- 6: Loch
- 7: Gepäckträger
- 8: Streben
- 9: Schutzblech
- 10: Adapter
- 11: Verschraubungsstelle
- 12: Formstück
- 14: Endstück
- 15: Aussparung
- 16: Riegelelement
- 17: Feder
- 18: Taste

## Patentansprüche

1. Anordnung zum Halten eines Zubehörs an einem Fahrrad, insbesondere an einem Fahrrad-Gepäckträger (7),
• wobei das Fahrrad, insbesondere der Gepäckträger (7), Anschlussmittel aufweist,
• und wobei das Zubehör Anschlussmittel aufweist, die dazu eingerichtet sind, im Gebrauch mit den Anschlussmitteln des Fahrrads, insbesondere des Gepäckträgers (7), zusammenzuwirken und das Zubehör am Fahrrad, insbesondere am Gepäckträger (7), zu halten,
**dadurch gekennzeichnet,**
• **dass** erste Anschlussmittel ein Anschlussprofil (2) mit einer Nut (3) aufweisen,
∘ wobei der Nutquerschnitt in der Oberfläche des Anschlussprofils (2) mündet
∘ und sich von der Mündung in das Innere des Anschlussprofils (2) hin erweitert,
• und **dass** zweite Anschlussmittel, die mit den ersten Anschlussmitteln zusammenwirken, folgende Elemente aufweisen:
∘ einen Keder (4), der im Gebrauch in dem erweiterten Querschnittsbereich des Anschlussprofils (2) aufgenommen ist,
∘ und eine so genannte Fahne (5), welche entlang des Keders (4) an diesen anschließt, einen flacheren Querschnitt als der Keder (4) aufweist und sich im Gebrauch aus der Nut (3) des Anschlussprofils (2) heraus erstreckt,
• wobei die Nut (3) an einem ihrer beiden Stirnenden in der Art offen ist, dass der Keder (4) samt Fahne (5) an diesem Stirnende in die Nut (3) einführbar ist.

2. Anordnung nach Anspruch 1,
**dadurch gekennzeichnet,**
**dass** die ersten Anschlussmittel am Fahrrad, insbesondere am Gepäckträger (7), und die zweiten Anschlussmittel am Zubehör angeordnet sind.

3. Anordnung nach Anspruch 1 oder 2,
**dadurch gekennzeichnet,**
**dass** die ersten Anschlussmittel ein Riegelelement (16) aufweisen, welches zwischen einer Riegelstellung und einer Freigabestellung beweglich ist,
und die zweiten Anschlussmittel eine Riegelkontur aufweisen, welche im Gebrauch mit dem Riegelelement (16) in der Art zusammenwirkt, dass das Zubehör an dem Fahrrad, insbesondere an dem Gepäckträger (7), festlegbar ist, indem das Riegelelement (16) und die Riegelkontur in der Riegelstellung des Riegelelements (16) formschlüssig ineinandergreifen.

4. Anordnung nach Anspruch 3,
**dadurch gekennzeichnet,**
**dass** die Riegelkontur des Zubehörs als Unterbrechung des Keders (4) und / oder der Fahne (5) ausgestaltet ist,
oder dass die Riegelkontur des Zubehörs als ein Endstück (14) ausgestaltet ist, welches an ein Ende des Keders (4) anschließt.

5. Anordnung nach einem der vorhergehenden Ansprüche,
**dadurch gekennzeichnet,**
**dass** das Anschlussprofil (2) geradlinig verläuft und im Gebrauch liegend ausgerichtet ist.

6. Fahrrad-Zubehör, das dazu eingerichtet ist, als Zubehör einer Anordnung nach einem der vorhergehenden Ansprüche verwendet zu werden,
wobei das Zubehör einen Hauptkörper aufweist, an dem die Anschlussmittel des Zubehörs befestigt sind.

7. Zubehör nach Anspruch 6,
**dadurch gekennzeichnet,**
**dass** an dem Hauptkörper eine bewegliche Blende angeordnet ist, welche je nach ihrer Stellung die Anschlussmittel des Zubehörs wahlweise verdeckt oder freigibt und welche in ihrer die Anschlussmittel verdeckenden Stellung am Hauptkörper festlegbar ist.

8. Zubehör nach Anspruch 6 oder 7,
**dadurch gekennzeichnet,**
**dass** das Zubehör die zweiten Anschlussmittel aufweist, wobei die Fahne (5) den Keder (4) mit einem Hauptkörper des Zubehörs verbindet.

9. Zubehör nach einem der Ansprüche 6 bis 8,
**dadurch gekennzeichnet,**
**dass** an wenigstens eines der beiden Enden des Keders (4) ein Endstück (14) anschließt, welches sich vom Keder (4) aus verjüngt.

10. Zubehör nach einem der Ansprüche 6 bis 9,
**dadurch gekennzeichnet,**
**dass** der Keder (4) zusammen mit der Fahne (5) als extrudiertes Kunststoffprofil ausgestaltet ist.

11. Gepäckträger (7), der dazu eingerichtet ist, als Gepäckträger (7) einer Anordnung nach einem der Ansprüche 1 bis 5 verwendet zu werden, und der die Anschlussmittel aufweist, die dazu eingerichtet sind, mit den Anschlussmitteln des Zubehörs zusammenzuwirken,
wobei bevorzugt der Gepäckträger (7) die ersten Anschlussmittel aufweist.

12. Gepäckträger nach Anspruch 11,
**dadurch gekennzeichnet,**
**dass** der Gepäckträger (7) dazu eingerichtet ist, eine Anordnung nach Anspruch 3 zu schaffen,
wobei das Riegelelement (16) mit einem weiteren Verriegelungsmechanismus des Gepäckträgers (7) in der Art gekoppelt ist, dass beide mittels eines gemeinsamen Betätigungselements in ihre jeweilige Freigabestellung beweglich sind.

13. Gepäckträger nach Anspruch 11 oder 12,
**dadurch gekennzeichnet,**
**dass** das Anschlussprofil (2) als Aluminium-Strangpressprofil ausgestaltet ist.

14. Gepäckträger nach einem der Ansprüche 11 bis 13,
**dadurch gekennzeichnet,**
**dass** die Nut (3) im Gebrauch in eine Seitenfläche des Gepäckträgers (7) mündet und / oder dass die Nut (3) im Gebrauch in eine untere Fläche des Gepäckträgers (7) mündet.

15. Gepäckträger nach Anspruch 14,
**dadurch gekennzeichnet,**
**dass** die Nut (3) einen ersten Abschnitt aufweist, der im Gebrauch in eine untere Fläche des Gepäckträgers (7) mündet,
und einen zweiten Abschnitt aufweist, der im Gebrauch in eine Seitenfläche des Gepäckträgers (7) mündet, wobei der zweite Abschnitt kürzer ist als der erste Abschnitt,
und wobei der zweite Abschnitt dazu eingerichtet ist, dass der Keder (4) in die Nut (3) einführbar ist.
